# EUROPEAN PATENT APPLICATION

(11) **EP 4 521 654 A1**
(43) Date of publication of application: **12.03.2025**
(21) Application number: 23820059.6
(22) Date of filing: 02.06.2023
(51) Int. Cl.: H04B 7/06, H04B 1/3827, H04B 17/318, H04B 1/00, H04B 1/50, H04B 1/04

(54) **ELECTRONIC DEVICE AND TRANSMISSION ANTENNA SELECTION METHOD THEREFOR**

(30) Priority: 07.06.2022 KR 20220068956; 30.06.2022 KR 20220080893
(71) Applicant: Samsung Electronics Co., Ltd., Suwon-si, Gyeonggi-do 16677 (KR)
(72) Inventor: MIN, Jungsik, Suwon-si Gyeonggi-do 16677 (KR); HEO, Wonhyung, Suwon-si Gyeonggi-do 16677 (KR); KIM, Yelim, Suwon-si Gyeonggi-do 16677 (KR); PARK, Jinseong, Suwon-si Gyeonggi-do 16677 (KR); SON, Dongil, Suwon-si Gyeonggi-do 16677 (KR); SON, Seunghee, Suwon-si Gyeonggi-do 16677 (KR); YOON, Kyoungsik, Suwon-si Gyeonggi-do 16677 (KR); HAN, Sanghyun, Suwon-si Gyeonggi-do 16677 (KR)
(74) Representative: Gulde & Partner
(86) International application number: PCT/KR2023/007631
(87) International publication number: WO 2023/239123

(57) **Abstract**

An electronic device according to one embodiment disclosed in the present document can output a designated wireless signal through a first antenna on the basis that the designated wireless signal is output at a designated strength or higher through a second antenna, while a first wireless signal of a first frequency band and a second wireless signal of a second frequency band are output through the first antenna and/or the second antenna. The electronic device can identify, through a proximity sensor, whether an external object is in proximity thereto, and adjust, on the basis of the identified proximity, the strength of the designated wireless signal that is output through the first antenna.

## Description

### TECHNICAL FIELD

Various embodiments disclosed herein relate to an electronic device and a method for selecting a transmitting antenna thereof.

### BACKGROUND ART

Recently, with the development of ultra-high-speed communication technology, portable electronic devices that perform wireless communication using a plurality of frequency bands simultaneously, such as long-term evolution (LTE), carrier aggregation (CA) and LTE wireless fidelity (Wi-Fi) CA, are becoming widespread.

The portable electronic device may include a plurality of antennas for transmitting and receiving wireless signals to perform the wireless communication. In this case, the portable electronic device may perform the wireless communication by allocating a plurality of frequency bands to the plurality of antennas, respectively.

In addition, the portable electronic device may perform a power back off operation to meet the specific absorption rate (SAR) standard. The specific absorption rate refers to the amount of energy absorbed per unit mass by the human body from electromagnetic waves generated by a portable electronic device while performing wireless communication, and power back-off refers to an operation of lowering the intensity of a wireless signal to be output through an antenna below a specified value.

### DISCLOSURE OF THE INVENTION

### TECHNICAL PROBLEM

Existing portable electronic devices transmit wireless signals of a specific frequency band through a pre-specified antenna among a plurality of antennas capable of outputting wireless signals of the specific frequency band. In other words, existing portable electronic devices have used antennas that are passively pre-specified to output wireless signals of the specific frequency band.

However, in the existing methods for selecting a transmitting antenna, portable electronic devices may not meet the SAR standard since the devices select an antenna to output wireless signals regardless of the SAR standard. For example, the portable electronic device may include a first antenna capable of lowering the intensity of a wireless signal to be output using information obtained from a proximity sensor and a second antenna incapable of lowering the intensity. In this case, even if the intensity of a specific wireless signal output through the second antenna is equal to or greater than a specified intensity, it is not possible to perform the power back-off operation, and thus the SAR standard may not be met.

In addition, the portable electronic device may output wireless signals in various electric field situations such as extremely weak electric fields, medium weak electric fields, or strong electric fields. However, existing methods for selecting a transmitting antenna may not be able to efficiently respond to the comprehensive network environment in which the portable electronic device is situated in terms of communication quality.

### TECHNICAL SOLUTION

An electronic device according to one embodiment disclosed herein includes a proximity sensor for identifying whether an external object is in proximity, a first antenna operating as an electrode for the proximity sensor to detect a signal related to whether the external object is in proximity, a second antenna that does not operate as the electrode for the proximity sensor to detect a signal related to whether the external object is in proximity, a communication circuitry, a processor, and a memory storing instructions, in which the instructions, when executed by the processor, cause the electronic device to identify whether a specified wireless signal among a first wireless signal of a first frequency band and a second wireless signal of a second frequency band is output through the second antenna while outputting the first wireless signal and the second wireless signal through the first antenna and/or the second antenna, identify an intensity of the specified wireless signal output through the second antenna based on identification that the specified wireless signal is output through the second antenna, output the specified wireless signal through the first antenna based on the intensity of the specified wireless signal being equal to or greater than a specified intensity, identify whether the external object is in proximity through the proximity sensor, and adjust the intensity of the specified wireless signal output through the first antenna based on the identifying of whether the external object is in proximity.

### ADVANTAGEOUS EFFECTS

According to embodiments disclosed herein, an electronic device can perform wireless communication in compliance with the specific absorption rate standard by selecting an antenna to output a specific wireless signal according to the intensity of the specific wireless signal.

In addition, according to the embodiments disclosed herein, the electronic device can improve the data transmission speed by selecting an optimal antenna to output a wireless signal depending on a communication environment.

### BRIEF DESCRIPTION OF THE DRAWINGS

FIG. 1 is a block diagram of an electronic device in a network environment according to various embodiments.
FIG. 2 is a block diagram of an electronic device according to one embodiment.
FIG. 3 is a flowchart of operations of the electronic device according to one embodiment.
FIG. 4 is a flowchart of operations of the electronic device according to one embodiment.
FIG. 5 is a flowchart of operations of the electronic device according to one embodiment.

With regard to the description of the drawings, similar reference numerals may be used to refer to similar elements.

### MODE FOR CARRYING OUT THE INVENTION

Hereinafter, various embodiments disclosed herein will be described with reference to the accompanying drawings. However, this is not intended to limit the present disclosure to the specific embodiments, and it should be understood to include various modifications, equivalents, and/or alternatives of embodiments of the present disclosure. With regard to the description of the drawings, similar reference numerals may be used to refer to similar elements.

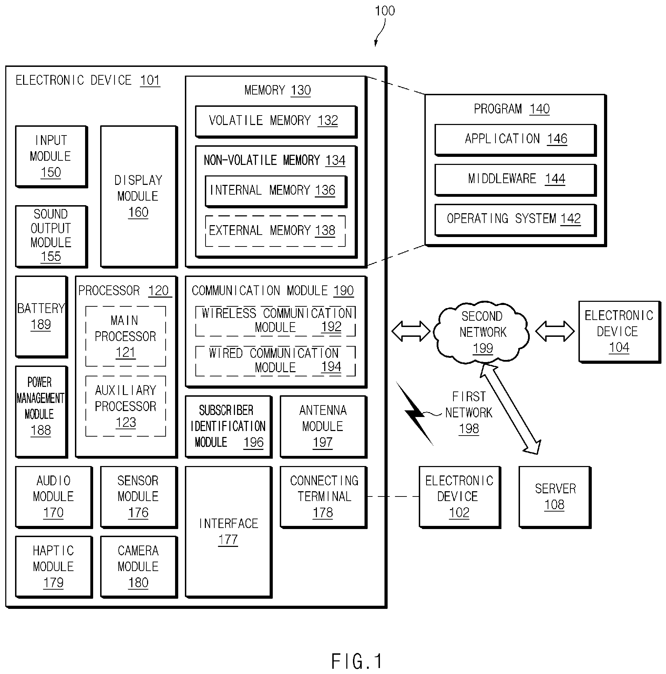

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

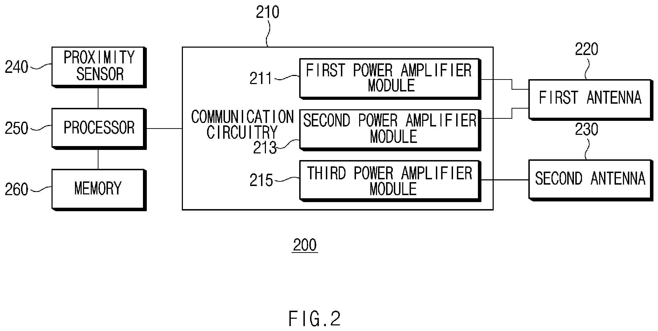

FIG. 2 is a block diagram of an electronic device 200 according to one embodiment.

Referring to FIG. 2, the electronic device 200 (e.g., the electronic device 101 in FIG. 1) includes a communication circuitry 210 (e.g., the wireless communication module 192 in FIG. 1), a first antenna 220 (e.g., the antenna module 197 in FIG. 1), a second antenna 230 (e.g., the antenna module 197 in FIG. 1), a proximity sensor 240 (e.g., the sensor module 176 in FIG. 1), a processor 250 (e.g., the processor 120 in FIG. 1), and/or a memory 260 (e.g., the memory 130 in FIG. 1). According to some embodiments, in the electronic device 200, at least one of the components in FIG. 2 may be omitted, or one or more other components may be added. According to some embodiments, some of the components may be implemented as single integrated circuitry.

The communication circuitry 210 may establish a wireless communication channel between the electronic device 200 and an external electronic device (e.g., the electronic device 104 or the server 108 in FIG. 1) and communicate through the established communication channel. The communication circuitry 210 may up-convert a baseband signal into a wireless signal or downconvert a wireless signal into a baseband signal to transmit and receive the wireless signal through the wireless communication channel. According to one embodiment, the communication circuitry 210 may generate a wireless signal using a frequency band (e.g., a frequency band of LTE) used in cellular networks. The communication circuitry 210 may output the generated wireless signal through an antenna (e.g., the first antenna 220 or the second antenna 230).

According to one embodiment, the communication circuitry 210 may perform carrier aggregation (CA) using a plurality of wireless signals. The electronic device 200 may perform CA using two or more component carriers (CCs) allocated by a base station. The electronic device 200 may be allocated two or more CCs for at least one link, either the uplink or the downlink. In addition, each of the two or more CCs may have a specified frequency bandwidth.

According to one embodiment, the communication circuitry 210 may perform CA using one primary component carrier (PCC) and at least one secondary component carrier (SCC). According to one embodiment, the PCC may be used for transmitting and receiving control information and data, and the SCC may be used for transmitting and receiving data. Hereinafter, for convenience of description, two or more CCs allocated to the uplink of the electronic device 200 may be described as including one PCC (hereinafter, a "first CC") and one SCC (hereinafter, a "second CC"). However, without being limited or restricted thereto, two or more CCs allocated to the uplink of the electronic device 200 may include one PCC and two or more SCCs.

According to one embodiment, the communication circuitry 210 may generate a wireless signal using the first CC and a wireless signal using the second CC. The first CC may have a first bandwidth, and the second CC may have a second bandwidth. According to one embodiment, the first bandwidth and the second bandwidth may have different bandwidths. For example, the first CC may have a bandwidth of 5 MHz, the second CC may have a bandwidth of 10 MHz. In addition, the first CC and the second CC may be contiguous with each other across the frequency band or non-contiguous with each other across the frequency band. The communication circuitry 210 may perform CA by outputting a wireless signal using the first CC and a wireless signal using the second CC through at least one antenna (e.g., the first antenna 220 and/or the second antenna 230).

The communication circuitry 210 includes a plurality of power amplifier modules (e.g., a first power amplifier module 211, a second power amplifier module 213, and/or a third power amplifier module 215).

The plurality of power amplifier modules 211, 213, and 215 may amplify the intensity of at least one wireless signal generated by the communication circuitry 210. The plurality of power amplifier modules 211, 213, and 215 may transmit at least one amplified wireless signal to each antenna connected thereto (e.g., the first antenna 220 and the second antenna 230).

According to one embodiment, the plurality of power amplifier modules 211, 213, and 215 may be configured to amplify the intensity of wireless signals in respective specified frequency ranges. For example, the first power amplifier module 211 and the third power amplifier module 215 may be configured to amplify the intensity of a wireless signal in a first frequency range, and the second power amplifier module 213 may be configured to amplify the intensity of a wireless signal in a second frequency range. The first frequency range may refer to a mid and high frequency ranges, and the second frequency range may refer to a low frequency range. The low frequency range may be lower than the mid frequency range, and the mid frequency range may be lower than the high frequency range. Part of the low frequency range may overlap part of the mid frequency range, and part of the mid frequency range may overlap part of the high frequency range.

The first antenna 220 may be connected to the first power amplifier module 211 and the second power amplifier module 213, and can transmit wireless signals received from the first power amplifier module 211 and the second power amplifier module 213. Accordingly, the first antenna 220 may output wireless signals in both the first frequency range and the second frequency range. The second antenna 230 may be connected to the third power amplifier module 215, and may output wireless signals received from the third power amplifier module 215. Accordingly, the second antenna 230 may only output the wireless signal in the first frequency range.

Although FIG. 2 illustrates that only the third power amplifier module 215 is connected to the second antenna 230, the connection is not limited thereto, and fourth power amplifier module (not shown) configured to amplify the intensity of a wireless signal in the second frequency range may be additionally connected. In addition, although FIG. 2 illustrates that the electronic device 200 includes only the first antenna 220 and the second antenna 230 as antennas for outputting wireless signals, the electronic device 200 is not limited thereto and may include three or more antennas for outputting wireless signals depending on the specifications of the electronic device 200.

The proximity sensor 240 may generate a detection signal for identifying whether an external object (e.g., a human body or an object) is in proximity. According to one embodiment, the proximity sensor 240 may generate a detection signal for identifying whether an external object is in proximity through an electrode. According to one embodiment, the proximity sensor 240 may generate a detection signal representing the capacitance of an electrode that changes due to an external object. The proximity sensor 240 may transmit the generated detection signal to the processor 250.

One of the first antenna 220 and the second antenna 230 may operate as an electrode for the proximity sensor 240 for detecting a change in capacitance, and the other of the first antenna 220 and the second antenna 230 may not operate as an electrode for the proximity sensor 240 for detecting the change in capacitance. For example, the first antenna 220 may operate as the electrode, and the second antenna 230 may not operate as the electrode. For another example, the first antenna 220 may not operate as the electrode, and the second antenna 230 may operate as the electrode. For clarity of description, it is assumed below that the first antenna 220 operates as the electrode and the second antenna 230 does not operate as the electrode. Hereinafter, the antenna that operates as the electrode may be referred to as a sensing antenna, and the antenna that does not operate as the electrode may be referred to as a non-sensing antenna.

According to one embodiment, the processor 250 may identify communication quality through an antenna capable of outputting a first wireless signal and/or a second wireless signal. In one embodiment, the processor 250 may identify communication quality through an antenna capable of outputting the first wireless signal. In one embodiment, the processor 250 may identify communication quality through an antenna capable of outputting the second wireless signal.

According to one embodiment, the processor 250 may identify an antenna capable of outputting the first wireless signal of a first frequency band and/or an antenna capable of outputting the second wireless signal of a second frequency band. For example, when the first frequency band (or the second frequency band) is included in the first frequency range, the processor 250 may identify the first antenna 220 and the second antenna 230 as antennas capable of outputting the first wireless signal (or the second wireless signal). For another example, when the first frequency band (or the second frequency band) is included in the second frequency range, the processor 250 may identify the first antenna 220 as the antenna capable of outputting the first wireless signal (or the second wireless signal). In one embodiment, the identification of the antenna capable of outputting the first wireless signal and/or the second wireless signal may be based on a table stored in the memory 260. For example, the memory 260 may store a table such as [Table 1] below.

**[Table 1]**

| Frequency band | Outputtable antenna |
|---|---|
| B1 | First antenna, Second antenna |
| B2 | First antenna, Second antenna |
| B3 | First antenna, Second antenna |
| B4 | First antenna, Second antenna |
| B5 | First antenna |
| ... | ... |

The frequency bands listed in the [Table 1] (e.g., B1, B2, B3, B4, and B5) may represent frequency bands specified by the 3GPP communication standard. For example, B1 may represent a frequency band of 1.92 GHz to 1.98 GHz in the uplink, B2 may represent a frequency band of 1.85 GHz to 1.91 GHz in the uplink, B3 may represent a frequency band of 1.71 GHz to 1.785 GHz in the uplink, B4 may represent a frequency band of 1.71 GHz to 1.755 GHz in the uplink, and B5 may represent a frequency band of 824 MHz to 849 MHz in the uplink.

According to one embodiment, the processor 250 may identify the antenna capable of outputting the first wireless signal and/or the second wireless signal based on the [Table 1]. For example, when the first wireless signal is based on B1 included in the first frequency range, the processor 250 may identify the first antenna 220 and the second antenna 230 as the antennas capable of outputting the first wireless signal. In addition, when the second wireless signal is based on B5 included in the second frequency range, the processor 250 may identify the first antenna 220 as the antenna capable of outputting the second wireless signal.

According to one embodiment, the table stored in the memory 260 may include information on various frequency bands in addition to the frequency bands disclosed in [Table 1] (e.g., B1, B2, B3, B4, and B5).

According to one embodiment, the processor 250 may identify communication quality based on parameters identified through the first antenna 220 and/or the second antenna 230. The parameters may include parameters of at least one wireless signal output through the first antenna 220 and parameters of at least one wireless signal output through the second antenna 230. For example, the parameters may include the reference signal received power (RSRP) of the wireless signal output through the first antenna 220 and/or the second antenna 230.

Hereinafter, the parameter identified based on the wireless signal of the first frequency band output through the first antenna 220 may be referred to as a first parameter, the parameter identified based on the wireless signal of the first frequency band output through the second antenna 230 may be referred to as a second parameter, the parameter identified based on the wireless signal of a second frequency band output through the first antenna 220 may be referred to as a third parameter, and the parameter identified based on the wireless signal of the second frequency band output through the second antenna 230 may be referred to as a fourth parameter.

According to one embodiment, the processor 250 may determine antennas to output the first wireless signal of the first frequency band and/or the second wireless signal of the second frequency band, respectively, based on the parameters identified through the first antenna 220 and the second antenna 230.

According to one embodiment, the processor 250 may identify a first comparison value and a second comparison value based on the parameters identified through the first antenna 220 and the second antenna 230. The processor 250 may determine antennas to output the first wireless signal and/or the second wireless signal based on the identified first comparison value and second comparison value. In one embodiment, when the first comparison value is greater than the second comparison value by a specified reference value, the processor 250 may determine antennas to output the first wireless signal and/or the second wireless signal based on combinations of antennas and frequency bands used to derive parameters related to the first comparison value. In another embodiment, when the first comparison value is not greater than the second comparison value by a specified reference value, the processor 250 may determine antennas to output the first wireless signal and/or the second wireless signal based on combinations of antennas and frequency bands used to derive parameters related to the second comparison value.

In one embodiment, when the wireless signals of the first frequency band and the second frequency band are transmittable through the first antenna 220 and the second antenna 230 (e.g., when the first frequency band and the second frequency band are included in the first frequency range), the first comparison value and the second comparison value may be determined based on four parameters. For example, the first comparison value may be a value obtained by adding the first parameter and the fourth parameter, and the second comparison value may be a value obtained by adding the second parameter and the third parameter. In one embodiment, when the first comparison value is greater than the second comparison value by the specified reference value, the processor 250 may determine the first antenna 220 as the antenna to output the first wireless signal (that is, the combination of the antenna and the frequency band used to derive the first parameter) and determine the second antenna 230 as the antenna to output the second wireless signal (that is, the combination of the antenna and the frequency band used to derive the fourth parameter). In another embodiment, when the first comparison value is not greater than the second comparison value by the specified reference value, the processor 250 may determine the second antenna 230 as the antenna to output the first wireless signal (that is, the combination of the antenna and the frequency band used to derive the second parameter) and determine the first antenna 220 as the antenna to output the second wireless signal (that is, the combination of the antenna and the frequency band used to derive the third parameter).

In another embodiment, when the wireless signal of one of the first frequency band or the second frequency band may not be output through the second antenna 230 (e.g., when one frequency band is included in the second frequency range), the first comparison value and the second comparison value may be determined based on three parameters excluding the second parameter or the fourth parameter. For example, when the first frequency band is included in the second frequency range, the first comparison value and the second comparison value may be determined based on the first, third, and fourth parameters. In this case, the first comparison value may be a value obtained by adding the first parameter and the fourth parameter, and the second comparison value may be a value obtained by adding the first parameter and the third parameter. For another example, when the second frequency band is included in the second frequency range, the first comparison value and the second comparison value may be determined based on the first, second, and third parameters. In this case, the first comparison value may be a value obtained by adding the first parameter and the third parameter, and the second comparison value may be a value obtained by adding the second parameter and the third parameter.

In one embodiment, in the case in which the first frequency band is included in the second frequency range, when the first comparison value is greater than the second comparison value by the specified reference value, the processor 250 may determine the first antenna 220 as the antenna to output the first wireless signal (that is, the combination of the antenna and the frequency band used to derive the first parameter) and determine the second antenna 230 as the antenna to output the second wireless signal (that is, the combination of the antenna and the frequency band used to derive the fourth parameter). In another embodiment, in the case in which the first frequency band is included in the second frequency range, when the first comparison value is not greater than the second comparison value by the specified reference value, the processor 250 may determine the first antenna 220 as the antenna to output the first wireless signal (that is, the combination of the antenna and the frequency band used to derive the first parameter) and determine the first antenna 220 as the antenna to output the second wireless signal (that is, the combination of the antenna and the frequency band used to derive the third parameter).

In one embodiment, in the case in which the second frequency band is included in the second frequency range, when the first comparison value is greater than the second comparison value by the specified reference value, the processor 250 may determine the first antenna 220 as the antenna to output the first wireless signal (that is, the combination of the antenna and the frequency band used to derive the first parameter) and determine the first antenna 220 as the antenna to output the second wireless signal (that is, the combination of the antenna and the frequency band used to derive the third parameter). In another embodiment, in the case in which the second frequency band is included in the second frequency range, when the first comparison value is not greater than the second comparison value by the specified reference value, the processor 250 may determine the second antenna 230 as the antenna to output the first wireless signal (that is, the combination of the antenna and the frequency band used to derive the second parameter) and determine the first antenna 220 as the antenna to output the second wireless signal (that is, the combination of the antenna and the frequency band used to derive the third parameter).

In one embodiment, the specified reference value may be 0 dB. In another embodiment, the specified threshold may be 10 dB, or -10 dB.

According to one embodiment, the processor 250 may output the first wireless signal and the second wireless signal through the first antenna 220 and/or the second antenna 230 based on determining at least one antenna (e.g., the first antenna 220 and/or the second antenna 230) to output the first wireless signal of the first frequency band and the second wireless signal of the second frequency band. According to one embodiment, the processor 250 may identify whether a specified wireless signal is output through the non-sensing antenna. The specified wireless signal may be one of the first wireless signal of the first frequency band and the second wireless signal of the second frequency band.

According to one embodiment, the processor 250 may identify the intensity of the specified wireless signal output through the non-sensing antenna based on identification that the specified wireless signal is output through the non-sensing antenna.

According to one embodiment, the processor 250 may identify whether the intensity of the specified wireless signal output through the non-sensing antenna is equal to or greater than a specified intensity. According to one embodiment, the specified intensity may be an intensity at which the intensity of the wireless signal complies with a specific absorption rate (SAR) standard. For example, when the frequency band of the specified wireless signal is a frequency band of 2.62 GHz to 2.69 GHz, the specified intensity may be set to 21 dBm. However, without being limited or restricted thereto, the specified intensity may be variously set depending on the frequency band and/or SAR standard of the wireless signal being output.

According to one embodiment, the processor 250 may identify whether the specified wireless signal may be additionally output through the sensing antenna. According to one embodiment, when the sensing antenna is outputting a wireless signal in a frequency range (e.g., the first frequency range or the second frequency range) that includes the frequency band of the specified wireless signal, the processor 250 may identify that the specified wireless signal may not be additionally output through the sensing antenna. For example, when the specified wireless signal is the wireless signal of the first frequency range and the first antenna 220, which is the sensing antenna, is outputting the wireless signal of the first frequency range, the processor 250 may identify that the specified wireless signal may not be additionally output through the sensing antenna. For another example, when the specified wireless signal is the wireless signal of the first frequency range and the first antenna 220, which is the sensing antenna, is outputting only the wireless signal of the second frequency range, the processor 250 may identify that the specified wireless signal may be additionally output through the sensing antenna.

According to one embodiment, the processor 250 may additionally output the specified wireless signal through the sensing antenna based on the identification that specified wireless signal may be additionally output through the sensing antenna.

According to one embodiment, the processor 250 may change the respective wireless signals output through the sensing antenna and the non-sensing antenna to each other and output the changed wireless signals, based on identification that the specified wireless signal may not be additionally output through the sensing antenna. For example, when the sensing antenna is outputting the first wireless signal and the non-sensing antenna is outputting the second wireless signal, the processor 250 may change the output wireless signals to each other and output the second wireless signal through the sensing antenna and the first wireless signal through the non-sensing antenna.

According to one embodiment, the processor 250 may adjust the intensity of the specified wireless signal output through the sensing antenna depending on whether an external object is in proximity.

According to one embodiment, the processor 250 may identify whether an external object is in proximity. According to one embodiment, the processor 250 may identify whether an external object is in proximity through the proximity sensor 240. The proximity sensor 240 may generate a detection signal to identify whether an external object is in proximity through the sensing antenna, and transmit the generated detection signal to the processor 250. The processor 250 may identify whether an external object is in proximity based on the detection signal transmitted from the proximity sensor 240.

According to one embodiment, the processor 250 may adjust the intensity of the specified wireless signal output through the sensing antenna based on the identifying of whether an external object is in proximity. According to one embodiment, the processor 250 may reduce the intensity of the specified wireless signal output through the sensing antenna to be less than a specified intensity based on the identification that the external object is in proximity through the proximity sensor 240. The processor 250 may meet the SAR standard of the electronic device 200 by reducing the intensity of the specified wireless signal to be less than the specified intensity.

The memory 260 may store various data used by at least one component of the electronic device 200 (e.g., the communication circuitry 210, the proximity sensor 240, and/or the processor 250). For example, the various data may include, for example, software (e.g., the program) and input data or output data for a command related thereto. The memory 260 may store instructions that cause the processor 250 to perform specific operations.

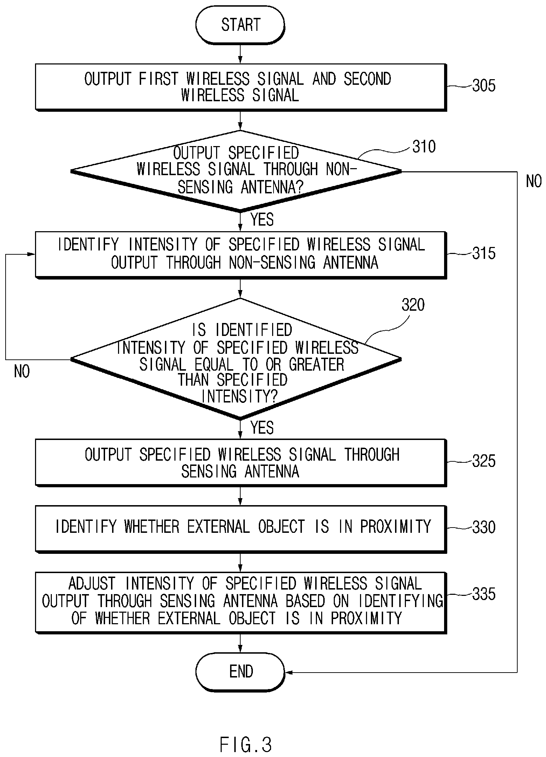

FIG. 3 is a flowchart of operations of the electronic device 200 according to one embodiment. FIG. 3 may be described using the components in FIG. 2.

Referring to FIG. 3, in operation 305, the electronic device 200 may output a first wireless signal and a second wireless signal. According to one embodiment, the electronic device 200 may output a first wireless signal of a first frequency band and a second wireless signal of a second frequency band through the first antenna 220 and/or the second antenna 230. For example, the electronic device 200 may output the first wireless signal and the second wireless signal through the first antenna 220. For another example, the electronic device 200 may output the first wireless signal through the first antenna 220 and the second wireless signal through the second antenna 230. For still another example, the electronic device 200 may output the second wireless signal through the first antenna 220 and output the first wireless signal through the second antenna 230.

According to one embodiment, the electronic device 200 may determine an antenna to output each of the first wireless signal and the second wireless signal according to a table stored in the memory 260. The table may include information about an antenna capable of outputting wireless signals utilizing each of a plurality of frequency bands, as shown in [Table 1] above.

In operation 310, the electronic device 200 may identify whether a specified wireless signal is output through a non-sensing antenna (e.g., the first antenna 220 or the second antenna 230). the specified wireless signal may be either the first wireless signal or the second wireless signal. According to one embodiment, the first antenna 220 may be a sensing antenna that operates as an electrode for the proximity sensor 240 to detect a signal related to whether an external object is in proximity, and the second antenna 230 may be a non-sensing antenna that does not operate as the electrode. According to another embodiment, the first antenna 220 may be a non-sensing antenna that does not operate as the electrode for the proximity sensor 240 to detect a signal related to whether an external object is in proximity, and the second antenna 230 may be a sensing antenna that operates as the electrode.

When it is identified that the specified wireless signal is not output through the non-sensing antenna in operation 310 ("NO"), the electronic device 200 may terminate the operations according to FIG. 3.

When it is identified that the specified wireless signal is output through the non-sensing antenna in operation 310 ("YES"), in operation 315, the electronic device 200 may identify the intensity of the specified wireless signal output through the non-sensing antenna.

In operation 320, the electronic device 200 may identify whether the intensity of the specified wireless signal output through the non-sensing antenna in operation 315 is equal to or greater than a specified intensity. According to one embodiment, the specified intensity may refer to an intensity of the wireless signal that meets the specific absorption rate (SAR) standard. For example, when the frequency band of the specified wireless signal is a frequency band of 2.62 GHz to 2.69 GHz, the specified intensity may be set to 21 dBm. However, without being limited or restricted thereto, the specified intensity may be variously set depending on the frequency band and/or SAR standard of the wireless signal being output.

When it is identified that the intensity of the specified wireless signal in operation 320 is less than the specified intensity ("NO"), the electronic device 200 may identify the intensity of the specified wireless signal output through the non-sensing antenna by connecting to operation 315.

When it is identified that the intensity of the specified wireless signal in operation 320 is equal to or greater than the specified intensity ("YES"), in operation 325, the electronic device 200 may output the specified wireless signal through the sensing antenna. According to one embodiment, the electronic device 200 may select the sensing antenna rather than the non-sensing antenna as the antenna to output the specified wireless signal. The electronic device 200 may adjust the intensity of the specified wireless signal that does not conform to the SAR standard depending on whether an external object is in proximity through operations 330 and 335, which will be described below, by determining the sensing antenna as the antenna to output the specified wireless signal.

In operation 330, the electronic device 200 may identify whether an external object (e.g., a human body or an object) is in proximity. According to one embodiment, the electronic device 200 may identify whether an external object is in proximity through the proximity sensor 240. The proximity sensor 240 may generate a detection signal to identify proximity of an external object through the sensing antenna. The electronic device 200 may identify whether an external object is in proximity based on a detection signal generated by the proximity sensor 240.

In operation 335, the electronic device 200 may adjust the intensity of the specified wireless signal output through the sensing antenna based on the identifying of whether an external object is in proximity in operation 330. According to one embodiment, the electronic device 200 may reduce the intensity of the specified wireless signal output through the sensing antenna to less than the specified intensity based on identification that the external object is in proximity through the proximity sensor 240. The electronic device 200 may meet the SAR standard of the electronic device 200 by reducing the intensity of the specified wireless signal to less than a specified intensity.

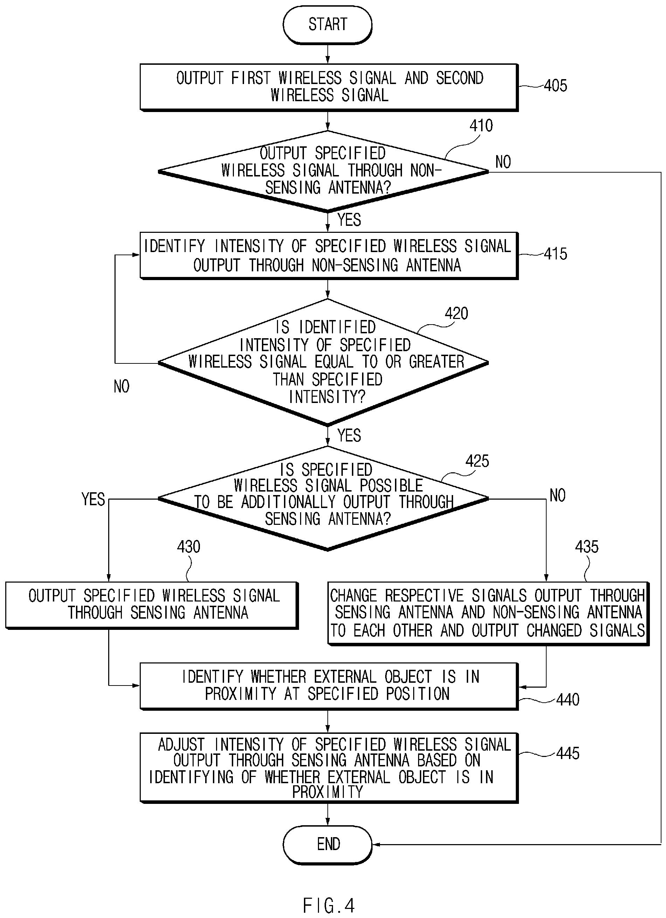

FIG. 4 is a flowchart of operations of the electronic device 200 according to one embodiment. FIG. 4 may be described using the components in FIG. 2.

According to one embodiment, operations 405 to 445 may be understood to be performed in the processor 250 of the electronic device 200.

Referring to FIG. 4, in operation 405, the electronic device 200 may output a first wireless signal and a second wireless signal. According to one embodiment, the electronic device 200 may output a first wireless signal of a first frequency band and a second wireless signal of a second frequency band through the first antenna 220 and/or the second antenna 230. For example, the electronic device 200 may output the first wireless signal and the second wireless signal through the first antenna 220. For another example, the electronic device 200 may output the first wireless signal through the first antenna 220 and the second wireless signal through the second antenna 230. For still another example, the electronic device 200 may output the second wireless signal through the first antenna 220 and output the first wireless signal through the second antenna 230.

According to one embodiment, the electronic device 200 may determine an antenna to output each of the first wireless signal and the second wireless signal according to a table stored in the memory 260. The table may include information about an antenna capable of outputting wireless signals utilizing each of a plurality of frequency bands, as shown in [Table 1] above.

In operation 410, the electronic device 200 may identify whether a specified wireless signal is output through a non-sensing antenna (e.g., the first antenna 220 or the second antenna 230). The specified wireless signal may be either the first wireless signal or the second wireless signal. According to one embodiment, the first antenna 220 may be a sensing antenna that operates as an electrode for the proximity sensor 240 to detect a signal related to whether an external object is in proximity, and the second antenna 230 may be a non-sensing antenna that does not operate as the electrode. According to another embodiment, the first antenna 220 may be a non-sensing antenna that does not operate as the electrode for the proximity sensor 240 to detect a signal related to whether an external object is in proximity, and the second antenna 230 may be a sensing antenna that operates as the electrode.

When it is identified that the specified wireless signal is not output through the non-sensing antenna in operation 410 ("NO"), the electronic device 200 may terminate the operations according to FIG. 4.

When it is identified that the specified wireless signal is output through the non-sensing antenna in operation 410 ("YES"), in operation 415, the electronic device 200 may identify the intensity of the specified wireless signal output through the non-sensing antenna.

In operation 420, the electronic device 200 may identify whether the intensity of the specified wireless signal identified in operation 415 is equal to or greater than the specified intensity. According to one embodiment, the specified intensity may refer to an intensity of the wireless signal that meets the specific absorption rate (SAR) standard. For example, when the frequency band of the specified wireless signal is a frequency band of 2.62 GHz to 2.69 GHz, the specified intensity may be set to 21 dBm. However, without being limited or restricted thereto, the specified intensity may be variously set depending on the frequency band and/or SAR standard of the wireless signal being output.

When it is identified that the intensity of the first wireless signal in operation 420 is less than the specified intensity ("NO"), the electronic device 200 may identify the intensity of the specified wireless signal output through the non-sensing antenna by connecting to operation 415.

When it is identified that the intensity of the first wireless signal is equal to or greater than the specified intensity in operation 420 ("YES"), in operation 425, the electronic device 200 may identify whether the first wireless signal may be additionally output through the first antenna 220.

According to one embodiment, the first antenna 220 may be connected to the first power amplifier module 211 that amplifies the intensity of the wireless signal in the first frequency range and the second power amplifier module 213 that amplifies the intensity of the wireless signal in the second frequency range. In this case, the first antenna 220 may output the wireless signal in the first frequency range and the wireless signal in the second frequency range.

According to one embodiment, the electronic device 200 may identify whether the specified wireless signal may be additionally output through the sensing antenna. According to one embodiment, when the sensing antenna is outputting a wireless signal in a frequency range (e.g., the first frequency range or the second frequency range) that includes the frequency band of the specified wireless signal, the electronic device 200 may identify that the specified wireless signal may not be additionally output through the sensing antenna. For example, when the specified wireless signal is the wireless signal of the first frequency range and the first antenna 220, which is the sensing antenna, is outputting the wireless signal of the first frequency range, the electronic device 200 may identify that the specified wireless signal may not be additionally output through the sensing antenna. For another example, when the specified wireless signal is the wireless signal of the first frequency range and the first antenna 220, which is the sensing antenna, is outputting only the wireless signal of the second frequency range, the electronic device 200 may identify that the specified wireless signal may be additionally output through the sensing antenna.

When it is identified that the specified wireless signal may be additionally output through the sensing antenna in operation 425 ("YES"), in operation 430, the electronic device 200 may additionally output the specified wireless signal through the sensing antenna. According to one embodiment, the electronic device 200 may select the sensing antenna rather than the non-sensing antenna as the antenna to output the specified wireless signal. The electronic device 200 may adjust the intensity of the specified wireless signal that does not conform to the SAR standard depending on whether an external object is in proximity through operations 440 and 445, which will be described below, by determining the sensing antenna as the antenna to output the specified wireless signal.

When it is identified that the specified wireless signal may not be additionally output through the sensing antenna in operation 425 ("NO"), in operation 435, the electronic device may change the respective wireless signals output through the sensing antenna and the non-sensing antenna to each other and output the changed signals. For example, when the sensing antenna is outputting the first wireless signal and the non-sensing antenna is outputting the second wireless signal, the processor 250 may change the output wireless signals to each other and output the second wireless signal through the sensing antenna and the first wireless signal through the non-sensing antenna. The electronic device 200 may adjust the intensity of the specified wireless signal that does not conform to the SAR standard depending on whether an external object is in proximity through operations 440 and 445, which will be described below, by determining the sensing antenna as the antenna to output the specified wireless signal.

In operation 440, the electronic device 200 may identify whether an external object (e.g., a human body or an object) is in proximity. According to one embodiment, the electronic device 200 may identify whether an external object is in proximity through the proximity sensor 240. The proximity sensor 240 may generate a detection signal to identify whether an external object is in proximity through the sensing antenna. The electronic device 200 may identify whether an external object is in proximity based on a detection signal generated by the proximity sensor 240.

In operation 445, the electronic device 200 may adjust the intensity of the specified wireless signal output through the sensing antenna based on the identifying of whether an external object is in proximity in operation 440. According to one embodiment, the electronic device 200 may reduce the intensity of the specified wireless signal output through the sensing antenna to less than the specified intensity based on identification that the external object is in proximity through the proximity sensor 240. The electronic device 200 can comply with the SAR standard of the electronic device 200 by reducing the intensity of the specified wireless signal to less than a specified intensity.

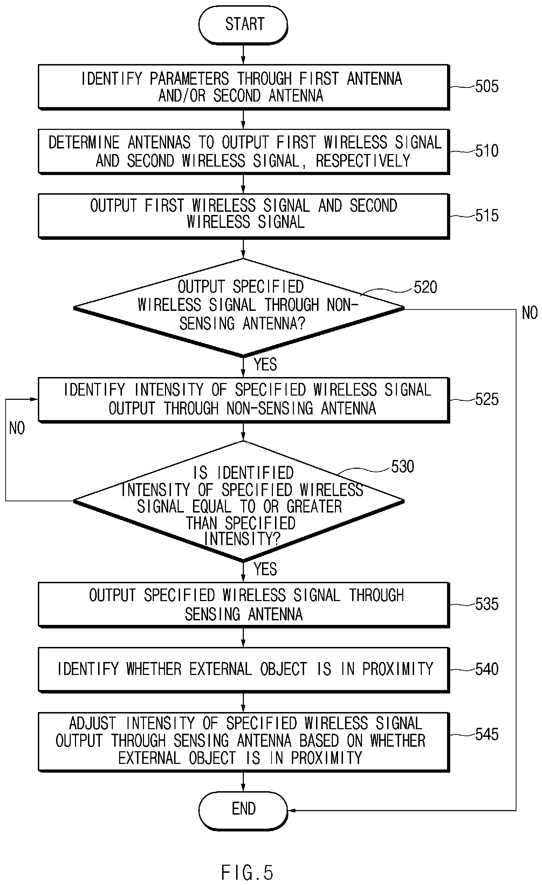

FIG. 5 is a flowchart of operations of the electronic device 200 according to one embodiment. FIG. 5 may be described using the components in FIG. 2.

According to one embodiment, operations 505 to 545 may be understood to be performed in the processor 250 of the electronic device 200.

Referring to FIG. 5, in operation 505, the electronic device 200 may identify parameters through the first antenna 220 and/or the second antenna 230. The parameters may include parameters of at least one wireless signal output through the first antenna 220 and parameters of at least one wireless signal output through the second antenna 230. For example, the parameters may include the reference signal received power (RSRP) of the wireless signal output through the first antenna 220 and/or the second antenna 230.

In operation 510, the electronic device 200 may determine antennas to output a first wireless signal of a first frequency band and a second wireless signal of a second frequency band, respectively.

According to one embodiment, the electronic device 200 may identify a first comparison value and a second comparison value based on the parameters identified through the first antenna 220 and the second antenna 230. The electronic device 200 may determine antennas to output the first wireless signal and/or the second wireless signal based on the identified first comparison value and second comparison value. In one embodiment, when the first comparison value is greater than the second comparison value by a specified reference value, the electronic device 200 may determine antennas to output the first wireless signal and/or the second wireless signal based on combinations of antennas and frequency bands used to derive parameters related to the first comparison value. In another embodiment, when the first comparison value is not greater than the second comparison value by a specified reference value, the electronic device 200 may determine antennas to output the first wireless signal and/or the second wireless signal based on combinations of antennas and frequency bands used to derive parameters related to the second comparison value.

In one embodiment, when the wireless signals of the first frequency band and the second frequency band are transmittable through the first antenna 220 and the second antenna 230 (e.g., when the first frequency band and the second frequency band are included in the first frequency range), the first comparison value and the second comparison value may be determined based on four parameters. For example, the first comparison value may be a value obtained by adding the first parameter and the fourth parameter, and the second comparison value may be a value obtained by adding the second parameter and the third parameter. In one embodiment, when the first comparison value is greater than the second comparison value by the specified reference value, the electronic device 200 may determine the first antenna 220 as the antenna to output the first wireless signal (that is, the combination of the antenna and the frequency band used to derive the first parameter) and determine the second antenna 230 as the antenna to output the second wireless signal (that is, the combination of the antenna and the frequency band used to derive the fourth parameter). In another embodiment, when the first comparison value is not greater than the second comparison value by the specified reference value, the electronic device 200 may determine the second antenna 230 as the antenna to output the first wireless signal (that is, the combination of the antenna and the frequency band used to derive the second parameter) and determine the first antenna 220 as the antenna to output the second wireless signal (that is, the combination of the antenna and the frequency band used to derive the third parameter).

In another embodiment, when the wireless signal of one of the first frequency band or the second frequency band may not be output through the second antenna 230 (e.g., when one frequency band is included in the second frequency range), the first comparison value and the second comparison value may be determined based on three parameters excluding the second parameter or the fourth parameter. For example, when the first frequency band is included in the second frequency range, the first comparison value and the second comparison value may be determined based on the first, third, and fourth parameters. In this case, the first comparison value may be a value obtained by adding the first parameter and the fourth parameter, and the second comparison value may be a value obtained by adding the first parameter and the third parameter. For another example, when the second frequency band is included in the second frequency range, the first comparison value and the second comparison value may be determined based on the first, second, and third parameters. In this case, the first comparison value may be a value obtained by adding the first parameter and the third parameter, and the second comparison value may be a value obtained by adding the second parameter and the third parameter.

In one embodiment, in the case in which the first frequency band is included in the second frequency range, when the first comparison value is greater than the second comparison value by the specified reference value, the electronic device 200 may determine the first antenna 220 as the antenna to output the first wireless signal (that is, the combination of the antenna and the frequency band used to derive the first parameter) and determine the second antenna 230 as the antenna to output the second wireless signal (that is, the combination of the antenna and the frequency band used to derive the fourth parameter). In another embodiment, in the case in which the first frequency band is included in the second frequency range, when the first comparison value is not greater than the second comparison value by the specified reference value, the electronic device 200 may determine the first antenna 220 as the antenna to output the first wireless signal (that is, the combination of the antenna and the frequency band used to derive the first parameter) and determine the first antenna 220 as the antenna to output the second wireless signal (that is, the combination of the antenna and the frequency band used to derive the third parameter).

In one embodiment, in the case in which the second frequency band is included in the second frequency range, when the first comparison value is greater than the second comparison value by the specified reference value, the electronic device 200 may determine the first antenna 220 as the antenna to output the first wireless signal (that is, the combination of the antenna and the frequency band used to derive the first parameter) and determine the first antenna 220 as the antenna to output the second wireless signal (that is, the combination of the antenna and the frequency band used to derive the third parameter). In another embodiment, in the case in which the second frequency band is included in the second frequency range, when the first comparison value is not greater than the second comparison value by the specified reference value, the electronic device 200 may determine the second antenna 230 as the antenna to output the first wireless signal (that is, the combination of the antenna and the frequency band used to derive the second parameter) and determine the first antenna 220 as the antenna to output the second wireless signal (that is, the combination of the antenna and the frequency band used to derive the third parameter).

In one embodiment, the specified reference value may be 0 dB. In another embodiment, the specified reference value may be 10 dB, or -10 dB.

In operation 515, the electronic device 200 may output a first wireless signal and a second wireless signal. According to one embodiment, the electronic device 200 may output the first wireless signal and the second wireless signal through antennas to output the first wireless signal and the second wireless signal, respectively, determined in operation 510.

In operation 520, the electronic device 200 may identify whether a specified wireless signal is output through a non-sensing antenna (e.g., the first antenna 220 or the second antenna 230). The specified wireless signal may be one of the first wireless signal and the second wireless signal. According to one embodiment, the first antenna 220 may be a sensing antenna that operates as an electrode for the proximity sensor 240 to detect a signal related to whether an external object is in proximity, and the second antenna 230 may be a non-sensing antenna that does not operate as the electrode. According to another embodiment, the first antenna 220 may be a non-sensing antenna that does not operate as the electrode for the proximity sensor 240 to detect a signal related to whether an external object is in proximity, and the second antenna 230 may be a sensing antenna that operates as the electrode.

When it is identified that the specified wireless signal is not output through the non-sensing antenna in operation 520 ("NO"), the electronic device 200 may terminate the operations according to FIG. 5.

When it is identified that the specified wireless signal is output through the non-sensing antenna in operation 520 ("YES"), in operation 525, the electronic device 200 may identify the intensity of the specified wireless signal output through the non-sensing antenna.

In operation 530, the electronic device 200 may identify whether the intensity of the specified wireless signal identified in operation 525 is equal to or greater than the specified intensity. According to one embodiment, the specified intensity may refer to an intensity of the wireless signal that meets the specific absorption rate (SAR) standard. For example, when the frequency band of the specified wireless signal is a frequency band of 2.62 GHz to 2.69 GHz, the specified intensity may be set to 21 dBm. However, without being limited or restricted thereto, the specified intensity may be variously set depending on the frequency band and/or SAR standard of the wireless signal being output.

When it is identified that the intensity of the specified wireless signal in operation 530 is less than the specified intensity ("NO"), the electronic device 200 may identify the intensity of the specified wireless signal output through the non-sensing antenna by connecting to operation 525.

When it is identified that the intensity of the specified wireless signal in operation 530 is equal to or greater than the specified intensity ("YES"), in operation 535, the electronic device 200 may output the specified wireless signal through the sensing antenna. According to one embodiment, the electronic device 200 may choose the sensing antenna over the non-sensing antenna as the antenna to output the specified wireless signal. The electronic device 200 may adjust the intensity of the specified wireless signal that does not conform to the SAR standard depending on whether an external object is in proximity through operations 540 and 545, which will be described below, by determining the sensing antenna as the antenna to output the specified wireless signal.

In operation 540, the electronic device 200 may identify whether an external object (e.g., a human body or an object) is in proximity. According to one embodiment, the electronic device 200 may identify whether the external object is in proximity through the proximity sensor 240. The proximity sensor 240 may generate a detection signal to identify whether the external object is in proximity through the sensing antenna. The electronic device 200 may identify whether an external object is in proximity based on the detection signal generated by the proximity sensor 240.

In operation 545, the electronic device 200 may adjust the intensity of the specified wireless signal output through the sensing antenna based on the identifying of whether an external object is in proximity in operation 540. According to one embodiment, the electronic device 200 may reduce the intensity of the specified wireless signal output through the sensing antenna to less than the specified intensity based on identification that the external object is in proximity through the proximity sensor 240. The electronic device 200 may meet the SAR standard of the electronic device 200 by reducing the intensity of the specified wireless signal to less than a specified intensity.

An electronic device according to one embodiment disclosed herein may include a proximity sensor for identifying whether an external object is in proximity, a first antenna operating as an electrode for the proximity sensor to detect a signal related to whether the external object is in proximity, a second antenna that does not operate as the electrode for the proximity sensor to detect a signal related to whether the external object is in proximity, a communication circuitry, a processor, and a memory storing instructions, in which the instructions may be configured to, when executed by the processor, cause the electronic device to identify whether a specified wireless signal among a first wireless signal of a first frequency band and a second wireless signal of a second frequency band is output through the second antenna while outputting the first wireless signal and the second wireless signal through the first antenna and/or the second antenna, identify an intensity of the specified wireless signal output through the second antenna based on identification that the specified wireless signal is output through the second antenna, output the specified wireless signal through the first antenna based on the intensity of the specified wireless signal being equal to or greater than a specified intensity, identify whether the external object is in proximity through the proximity sensor, and adjust the intensity of the specified wireless signal output through the first antenna based on the identifying of whether the external object is in proximity.

According to one embodiment disclosed herein, the instructions may be configured to, when executed by the processor, cause the electronic device to reduce the intensity of the specified wireless signal output through the first antenna to less than the specified intensity based on the identification that the external object is in proximity through the proximity sensor.

According to one embodiment disclosed herein, the specified intensity may be an intensity at which the intensity of the wireless signal meets a specific absorption rate (SAR) standard.

According to one embodiment disclosed herein, the instructions may be configured to, when executed by the processor, cause the electronic device to identify whether the specified wireless signal is possible to be additionally output through the first antenna based on the identified intensity of the specified wireless signal being equal to or greater than the specified intensity, additionally output the specified wireless signal through the first antenna based on identification that the specified wireless signal is possible to be additionally output through the first antenna, and change respective signals output through the first antenna and the second antenna to each other and output the changed signals based on identification that the specified wireless signal is not possible to be additionally output through the first antenna.

According to one embodiment disclosed herein, the electronic device may further include a first power amplifier module connected to the first antenna and configured to amplify an intensity of a wireless signal in a first frequency range and transmit the amplified wireless signal to the first antenna and a second power amplifier module connected to the first antenna and configured to amplify an intensity of a wireless signal in a second frequency range and transmit the amplified wireless signal to the first antenna, the first frequency range may include the first frequency band and the second frequency band and the specified wireless signal may be the first wireless signal, and the instructions may be configured to, when executed by the processor, cause the electronic device to identify that the specified wireless signal is not possible to be additionally output through the first antenna based on the second wireless signal being output through the first antenna.

According to one embodiment disclosed herein, the electronic device may further include a first power amplifier module connected to the first antenna and configured to amplify an intensity of a wireless signal in a first frequency range and transmit the amplified wireless signal to the first antenna and a second power amplifier module connected to the first antenna and configured to amplify an intensity of a wireless signal in a second frequency range and transmit the amplified wireless signal to the first antenna, the first frequency range may include the first frequency band, the second frequency range may include the second frequency band, and the specified wireless signal may be the first wireless signal, and the instructions may be configured to, when executed by the processor, cause the electronic device to identify that the specified wireless signal is possible to be additionally output through the first antenna based on the second wireless signal being output through the first antenna or the second wireless signal being output through the second antenna.

According to one embodiment disclosed herein, the instructions may be configured to, when executed by the processor, cause the electronic device to identify parameters through the first antenna and/or the second antenna, the parameters including parameters of a wireless signal output through the first antenna and/or the second antenna, determine an antenna to output each of the first wireless signal and the second wireless signal based on the parameters, and output the first wireless signal and the second wireless signal through the first antenna and/or the second antenna based on the determination prior to identifying whether the specified wireless signal is output through the second antenna.

According to one embodiment disclosed herein, the parameters may include reference signal received power (RSRP).

According to one embodiment disclosed herein, the electronic device may further include a first power amplifier module connected to the first antenna and configured to amplify an intensity of a wireless signal in a first frequency range and transmit the amplified wireless signal to the first antenna, a second power amplifier module connected to the first antenna and configured to amplify an intensity of a wireless signal in a second frequency range and transmit the amplified wireless signal to the first antenna, and a third power amplifier module connected to the second antenna and configured to amplify the intensity of the wireless signal in the first frequency range and transmit the amplified wireless signal to the second antenna, the first frequency range may include the first frequency band and the second frequency band, and the instructions may be configured to, when executed by the processor, cause the electronic device to identify a first parameter based on the first wireless signal of the first frequency band output through the first antenna, identify a second parameter based on the first wireless signal of the first frequency band output through the second antenna, identify a third parameter based on the second wireless signal of the second frequency band output through the first antenna, identify a fourth parameter based on the second wireless signal of the second frequency band output through the second antenna, compare a first comparison value obtained by adding the first parameter and the fourth parameter with a second comparison value obtained by adding the second parameter and the third parameter, determine the first antenna as the antenna to output the first wireless signal and determine the second antenna as the antenna to output the second wireless signal when the first comparison value is greater than the second comparison value by a specified reference value or more, and determine the second antenna as the antenna to output the first wireless signal and determine the first antenna as the antenna to output the second wireless signal when the first comparison value is not greater than the second comparison value by the specified reference value or more.

According to one embodiment disclosed herein, the electronic device may further include a first power amplifier module connected to the first antenna and configured to amplify an intensity of a wireless signal in a first frequency range and transmit the amplified wireless signal to the first antenna, a second power amplifier module connected to the first antenna and configured to amplify an intensity of a wireless signal in a second frequency range and transmit the amplified wireless signal to the first antenna, and a third power amplifier module connected to the second antenna and configured to amplify the intensity of the wireless signal in the first frequency range and transmit the amplified wireless signal to the second antenna, the first frequency range may include the first frequency band and the second frequency range may include the second frequency band, and the instructions may be configured to, when executed by the processor, cause the electronic device to identify a first parameter based on the first wireless signal of the first frequency band output through the first antenna, identify a second parameter based on the first wireless signal of the first frequency band output through the second antenna, identify a third parameter based on the second wireless signal of the second frequency band output through the first antenna, compare a third comparison value obtained by adding the first parameter and the third parameter with a fourth comparison value obtained by adding the second parameter and the third parameter, determine the first antenna as an antenna to output the first wireless signal and the second wireless signal when the third comparison value is greater than the fourth comparison value by a specified reference value or more, and determine the second antenna as the antenna to output the first wireless signal and determine the first antenna as the antenna to output the second wireless signal when the third comparison value is not greater than the fourth comparison value by the specified reference value or more.

The electronic device according to various embodiments disclosed herein may be one of various types of electronic devices. The electronic devices may include, for example, a portable communication device (e.g., a smartphone), a computer device, a portable multimedia device, a portable medical device, a camera, a wearable device, or a home appliance. According to an embodiment of the present disclosure, the electronic device is not limited to those described above.

It should be appreciated that various embodiments of the present disclosure and the terms used therein are not intended to limit the technological features set forth herein to particular embodiments and include various changes, equivalents, or replacements in corresponding embodiments. With regard to the description of the drawings, similar or related reference numerals may be used to refer to similar or related elements. It is to be understood that a singular form of a noun corresponding to an item may include one or more of the things, unless the relevant context clearly indicates otherwise. As used herein, each of phrases such as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Terms such as "1st" and "2nd," or "first" and "second" may be used to simply distinguish a corresponding component from another, and do not limit the components in other aspects (e.g., importance or order). It is to be understood that if an element (e.g., a first element) is referred to, with or without the term "operatively" or "communicatively," as "coupled to," "coupled to," "connected with," or "connected to" another element (e.g., a second element), it means that the element may be coupled to the other element directly (e.g., by wire), wirelessly, or via a third element.

As used in various embodiments disclosed herein, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to one embodiment, the module may be implemented in a form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. The term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to one embodiment, a method according to various embodiments disclosed herein may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the plurality of entities may be disposed separately from other components. According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as those performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a proximity sensor;
a first antenna used as an electrode of the proximity sensor;
a second antenna that is not used as an electrode of the proximity sensor;
a communication circuitry electrically connected to the first antenna and the second antenna;
a processor electrically connected to the proximity sensor and the communication circuitry; and
a memory electrically connected to the processor and storing instructions,
wherein the instructions, when executed by the processor, cause the electronic device to:
identify output of a specified wireless signal among a first wireless signal of a first frequency band and a second wireless signal of a second frequency band through the second antenna while outputting the first wireless signal and the second wireless signal through at least one of the first antenna or the second antenna;
identify an intensity of the specified wireless signal output through the second antenna based on the identifying of the output of the specified wireless signal through the second antenna;
output the specified wireless signal through the first antenna based on the identified intensity being equal to or greater than a specified intensity;
identify proximity of an external object through the proximity sensor while outputting the specified wireless signal through the first antenna; and
adjust the intensity of the specified wireless signal output through the first antenna based on the identified proximity.

2. The electronic device of claim 1, wherein the instructions, when executed by the processor, cause the electronic device to:
reduce the intensity of the specified wireless signal output through the first antenna to less than the specified intensity in case that the proximity of the external object is identified through the proximity sensor.

3. The electronic device of claim 1, wherein the specified intensity is an intensity of the wireless signal that meets a specific absorption rate (SAR) standard.

4. The electronic device of claim 1, wherein the instructions, when executed by the processor, cause the electronic device to:
identify whether the specified wireless signal is possible to be additionally output through the first antenna in case that the intensity of the specified wireless signal is equal to or greater than the specified intensity;
additionally output the specified wireless signal through the first antenna in case that it is identified that the specified wireless signal is possible to be additionally output through the first antenna; and
change respective signals output through the first antenna and the second antenna to each other and output the changed signals in case that it is identified that the specified wireless signal is not possible to be additionally output through the first antenna.

5. The electronic device of claim 4, further comprising:
a first power amplifier module connected to the first antenna and configured to amplify an intensity of a wireless signal in a first frequency range and transmit the amplified wireless signal to the first antenna; and
a second power amplifier module connected to the first antenna and configured to amplify an intensity of a wireless signal in a second frequency range and transmit the amplified wireless signal to the first antenna,
wherein the first frequency range includes the first frequency band and the second frequency band and the specified wireless signal is the first wireless signal, and
wherein the instructions, when executed by the processor, cause the electronic device to:
identify that the specified wireless signal is not possible to be additionally output through the first antenna while the second wireless signal is being output through the first antenna.

6. The electronic device of claim 4, further comprising:
a first power amplifier module connected to the first antenna and configured to amplify an intensity of a wireless signal in a first frequency range and transmit the amplified wireless signal to the first antenna; and
a second power amplifier module connected to the first antenna and configured to amplify an intensity of a wireless signal in a second frequency range and transmit the amplified wireless signal to the first antenna,
wherein the first frequency range includes the first frequency band, the second frequency range includes the second frequency band, and the specified wireless signal is the first wireless signal, and
wherein the instructions, when executed by the processor, cause the electronic device to:
identify that the specified wireless signal is possible to be additionally output through the first antenna while the second wireless signal is being output through the first antenna or the second wireless signal is being output through the second antenna.

7. The electronic device of claim 1, wherein the instructions, when executed by the processor, cause the electronic device to:
identify parameters through the first antenna and/or the second antenna, the parameters including parameters of a wireless signal output through the first antenna and/or the second antenna;
determine an antenna to output each of the first wireless signal and the second wireless signal based on the parameters; and
output the first wireless signal and the second wireless signal through the first antenna and/or the second antenna based on the determination prior to identifying whether the specified wireless signal is output through the second antenna.

8. The electronic device of claim 7, wherein the parameters include reference signal received power (RSRP).

9. The electronic device of claim 7, further comprising:
a first power amplifier module connected to the first antenna and configured to amplify an intensity of a wireless signal in a first frequency range and transmit the amplified wireless signal to the first antenna;
a second power amplifier module connected to the first antenna and configured to amplify an intensity of a wireless signal in a second frequency range and transmit the amplified wireless signal to the first antenna; and
a third power amplifier module connected to the second antenna and configured to amplify the intensity of the wireless signal in the first frequency range and transmit the amplified wireless signal to the second antenna,
wherein the first frequency range includes the first frequency band and the second frequency band,
the instructions, when executed by the processor, cause the electronic device to:
identify a first parameter based on the first wireless signal of the first frequency band output through the first antenna;
identify a second parameter based on the first wireless signal of the first frequency band output through the second antenna;
identify a third parameter based on the second wireless signal of the second frequency band output through the first antenna;
identify a fourth parameter based on the second wireless signal of the second frequency band output through the second antenna;
compare a first comparison value obtained by adding the first parameter and the fourth parameter with a second comparison value obtained by adding the second parameter and the third parameter;
determine the first antenna as the antenna to output the first wireless signal and determine the second antenna as the antenna to output the second wireless signal in case that the first comparison value is greater than the second comparison value by a specified reference value or more; and
determine the second antenna as the antenna to output the first wireless signal and determine the first antenna as the antenna to output the second wireless signal in case that the first comparison value is not greater than the second comparison value by the specified reference value or more.

10. The electronic device of claim 7, further comprising:
a first power amplifier module connected to the first antenna and configured to amplify an intensity of a wireless signal in a first frequency range and transmit the amplified wireless signal to the first antenna;
a second power amplifier module connected to the first antenna and configured to amplify an intensity of a wireless signal in a second frequency range and transmit the amplified wireless signal to the first antenna; and
a third power amplifier module connected to the second antenna and configured to amplify the intensity of the wireless signal in the first frequency range and transmit the amplified wireless signal to the second antenna,
wherein the first frequency range includes the first frequency band and the second frequency range includes the second frequency band,
the instructions, when executed by the processor, cause the electronic device to:
identify a first parameter based on the first wireless signal of the first frequency band output through the first antenna;
identify a second parameter based on the first wireless signal of the first frequency band output through the second antenna;
identify a third parameter based on the second wireless signal of the second frequency band output through the first antenna;
compare a third comparison value obtained by adding the first parameter and the third parameter with a fourth comparison value obtained by adding the second parameter and the third parameter;
determine the first antenna as an antenna to output the first wireless signal and the second wireless signal in case that the third comparison value is greater than the fourth comparison value by a specified reference value or more; and
determine the second antenna as the antenna to output the first wireless signal and determine the first antenna as the antenna to output the second wireless signal in case that the third comparison value is not greater than the fourth comparison value by the specified reference value or more.

11. A method of controlling an electronic device, the method comprising:
identifying output of a specified wireless signal among a first wireless signal of a first frequency band and a second wireless signal of a second frequency band through a second antenna while outputting the first wireless signal and the second wireless signal through at least one of a first antenna or the second antenna;
identifying an intensity of the specified wireless signal output through the second antenna based on the identifying of the output of the specified wireless signal through the second antenna;
outputting the specified wireless signal through the first antenna based on the identified intensity being equal to or greater than a specified intensity;
identifying proximity of an external object through the proximity sensor while outputting the specified wireless signal through the first antenna; and
adjusting the intensity of the specified wireless signal output through the first antenna based on the identified proximity.

12. The method of claim 11, further comprising reducing the intensity of the specified wireless signal output through the first antenna to less than the specified intensity in case that the proximity of the external object is identified through the proximity sensor.

13. The method of claim 11, wherein the specified intensity is an intensity of the wireless signal that meets a specific absorption rate (SAR) standard.

14. The method of claim 11, further comprising:
identifying whether the specified wireless signal is possible to be additionally output through the first antenna in case that the intensity of the specified wireless signal is equal to or greater than the specified intensity;
additionally outputting the specified wireless signal through the first antenna in case that it is identified that the specified wireless signal is possible to be additionally output through the first antenna; and
changing respective signals output through the first antenna and the second antenna to each other and outputting the changed signals in case that it is identified that the specified wireless signal is not possible to be additionally output through the first antenna.

15. The method of claim 14, further comprising identifying that the specified wireless signal is possible to be additionally output through the first antenna while the second wireless signal is being output through the first antenna or the second wireless signal is being output through the second antenna.
